# FASCICULE DE BREVET EUROPEEN

(11) **EP 2 643 628 B1**
(45) Date de publication et mention de la délivrance du brevet: **11.02.2015**
(21) Numéro de dépôt: 11785668.2
(22) Date de dépôt: 21.11.2011
(51) Int. Cl.: F17C 1/06

(54) **OUTILLAGE ET PROCEDE DE REALISATION D'UN LINER METALLIQUE**
VORRICHTUNG UND VERFAHREN ZUR HERSTELLUNG EINER METALLAUSKLEIDUNG
EQUIPMENT AND METHOD FOR PRODUCING A METAL LINER

(30) Priorité: 22.11.2010 FR 1059605
(43) Date de publication de la demande: 02.10.2013
(73) Titulaire: Airbus Defence and Space SAS, 78130 Les Mureaux (FR)
(72) Inventeur: CLAUDEL, Sylvain, F-33160 Saint-Médard-en-Jalles (FR); LACOUR, Dominique, F-33370 Tresses (FR)
(74) Mandataire: Maupilier, Didier
(86) Numéro de dépôt international: PCT/EP2011/070529
(87) Numéro de publication internationale: WO 2012/069399

(56) Documents cités:
- US-A- 3 321 347
- US-A- 3 508 677
- US-A- 5 822 838
- US-A1- 2004 118 855
- US-A1- 2007 205 201

## Description

La présente invention concerne la réalisation des liner métalliques et des objets comportant un tel liner.

Les liners métalliques sont en particulier utilisés dans le domaine des réservoirs composites bobinés.

Dans le cas de réservoirs de haute performance tels que ceux destinés au stockage sous pression de fluides, en particulier pour applications spatiales ou encore pour le stockage sous pression de fluides cryogéniques, les liners métalliques sont minces par rapport au volume du réservoir.

On entend par réservoirs hautes performances, des réservoirs optimisés en termes de masse, tels ceux utilisés dans les industries des transports en général, le transport spatial en particulier.

Les réservoirs composites haute performance destinés au stockage de fluides pressurisés sont généralement conçus en séparant les fonctions d'étanchéité et de tenue mécanique à la pression.

Le confinement du fluide, l'étanchéité et/ou la protection de la paroi en matériau composite vis-à-vis du fluide est assuré par une coque en principe mince en métal ou polymère appelée « liner » et la résistance à la pression du fluide contenu dans le réservoir est assurée par un bobinage de fibres composites enduites de résine.

Les fibres de composite (fibres et résine) sont déposées par bobinage filamentaire sur le liner.

Cette technologie est connue et on citera à titre d'exemple le brevet US 6 401 963 de Lockheed Martin.

La coque est mince car elle n'a pas de fonction mécanique et l'on cherche à minimiser la masse du réservoir.

Outre sa fonction d'étanchéification, le liner a également pour fonction de supporter les efforts induits par la dépose des fibres de carbone, pendant laquelle le liner se comporte comme un mandrin pour le bobinage, et d'assurer la surface de référence de la structure composite déposée.

Cette fonction secondaire de soutien du bobinage assurée par le liner implique un besoin de tenue mécanique et/ou de raideur du liner.

Ceci impose une épaisseur suffisante du liner dépendant des propriétés du matériau et de la géométrie de la pièce.

Les efforts de bobinage se traduisent sur le liner comme une compression locale de 0,3MPa environ et se traduisent en conséquence par une masse supplémentaire au niveau du réservoir fini.

Cela peut être particulièrement gênant pour les réservoirs de grande dimension, de plusieurs mètres, où la masse du liner devient significative ou lorsque le matériau du liner est ductile et/ou à basse limite élastique et/ou faible tenue mécanique; c'est le cas pour un liner en aluminium de grande pureté par exemple ou encore de façon générale, lorsque pour diminuer significativement la masse du liner on arrive à des épaisseurs inférieures à 1 mm pour des réservoirs de dimensions métriques.

La résistance du liner est aussi un paramètre important dans le cas où les fibres sont mises en place par bobinage contact ou placement de fibre.

En effet, ces procédés appliquent directement un effort sur le support au point de dépose de la fibre alors qu'en bobinage, cet effort résulte de la tension à laquelle est soumise le fil.

Dans le cas où le liner n'est pas capable de supporter les efforts de dépose de fil, ou quand il n'y a pas besoin de liner étanche, un mandrin est utilisé.

Il existe de nombreuses technologies de mandrins et on peut citer les mandrins métalliques ou les mandrins en matériau soluble (par exemple sable plus alcool polyvinylique soluble dans l'eau).

Un problème général est le démontage du mandrin après bobinage et fabrication du matériau composite du fait qu'on n'a en général accès au mandrin qu'à travers le futur orifice de remplissage du réservoir.

Le document US2007/205201 A1 décrit l'utilisation de demi-mandrins de bobinage pour le bobinage et l'utilisation de mandrins solubles pour le dépôt de plis composites.

Le document US 3,321,347 décrit un procédé de réalisation d'un liner métallique de bobinage par électrodéposition sur un mandrin soluble.

L'invention porte sur un nouvel outillage et un nouveau procédé de fabrication d'un liner métallique très mince et très précis pour réservoir composite à haute performance, éventuellement de grandes dimensions.

L'invention a notamment pour objectif de pouvoir utiliser des matériaux à très faible tenue mécanique, que ce soit du fait de leurs propriétés intrinsèques comme dans le cas d'un aluminium pur type 1050, ou simplement parce que l'épaisseur du liner est très mince.

L'outillage adapté à ce procédé et comprenant un mandrin soluble comme support au liner métallique, le mandrin soluble ayant pour rôle :
- d'assurer la fonction de support pour le liner métallique
- d'assurer la fonction de support mécanique pour le bobinage ultérieur, tant du point de vue mécanique que du point de vue géométrie
- d'assurer la fonction d'outillage de fabrication du liner métallique.

Plus précisément, la présente invention prévoit un outillage de fabrication d'un liner métallique notamment pour réservoir composite, qui comporte un mandrin configuré en plusieurs éléments de mandrin formant éléments support de pièces primaires constitutives du liner métallique, conformément à la revendication 1.

Selon un mode de réalisation particulier de l'invention, le liner étant un liner de réservoir cylindrique à extrémités arrondies, les éléments support comprennent au moins un fond avant, un fond arrière et au moins un corps cylindrique intermédiaire.

L'outillage comprend avantageusement des secteurs annulaires adaptés à se positionner sur les extrémités de jonction desdits fond avant, fond arrière et corps cylindrique intermédiaire, ces secteurs renforçant les éléments du mandrin au niveau de leurs jonctions.

Selon un mode de réalisation particulier, lesdits secteurs annulaires sont des secteurs en acier.

Les secteurs annulaires comportent avantageusement un décrochement annulaire périphérique adapté à former une gorge annulaire avec le décrochement annulaire périphérique d'un secteur adjacent.

Les secteurs annulaires sont préférablement des secteurs démontables.

Selon un mode de réalisation avantageux, les éléments de mandrin sont des pièces en matériau soluble.

Les pièces en matériau soluble sont préférablement recouvertes d'une peau bouche pores.

Selon un premier mode de réalisation, au moins certains des éléments de mandrin sont des pièces de révolution montées sur un axe porteur du mandrin.

Alternativement, au moins certains des éléments de mandrin sont montés sur des tubes de réception d'un axe porteur du mandrin.

L'invention concerne en outre un procédé de réalisation d'un objet comportant un liner tel qu'un réservoir composite, qui comporte une étape de pose de portions d'un liner sur des éléments de mandrin, une étape d'assemblage des éléments du mandrin portant les portions du liner et une étape de soudure des portions du liner sur les éléments du mandrin assemblés.

Selon un mode de réalisation applicable en particulier aux réservoirs composites bobinés, le procédé comporte une étape de bobinage de fibres sur le liner terminé sur le mandrin.

Selon un mode de réalisation préférentiel de l'invention, l'étape d'assemblage des éléments du mandrin est réalisée sur un axe d'entraînement en rotation du mandrin.

Dans le cas où le mandrin est un mandrin soluble, le procédé comporte avantageusement après l'étape de bobinage ou l'étape de soudure une étape de résorption du mandrin.

Le procédé comporte avantageusement une étape de positionnement de secteurs annulaires sur les extrémités de jonction des éléments de mandrin avant l'étape de pose des portions de liner sur les éléments de mandrin.

L'étape de soudure des portions du liner assemblé sur les éléments du mandrin est préférablement réalisée par soudure des bords en regard des portions du liner au dessus de gorges au niveau des secteurs annulaires.

L'étape de pose des portions du liner comprend avantageusement une étape de chauffe des portions de liner, une étape de positionnement des portions de liner sur les éléments de mandrin et une étape de refroidissement des portions de liner réalisant un frettage des portions de liner sur les éléments de mandrin.

Dans le procédé appliqué à la réalisation d'un réservoir composite à liner métallique, les éléments de mandrin sont conformés en un fond avant, fond arrière et au moins un corps cylindrique intermédiaire.

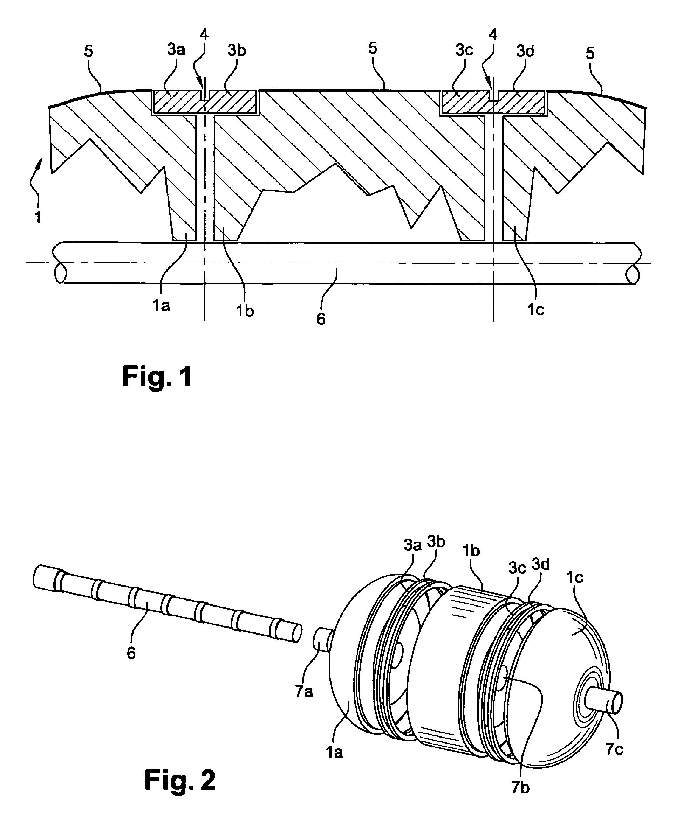

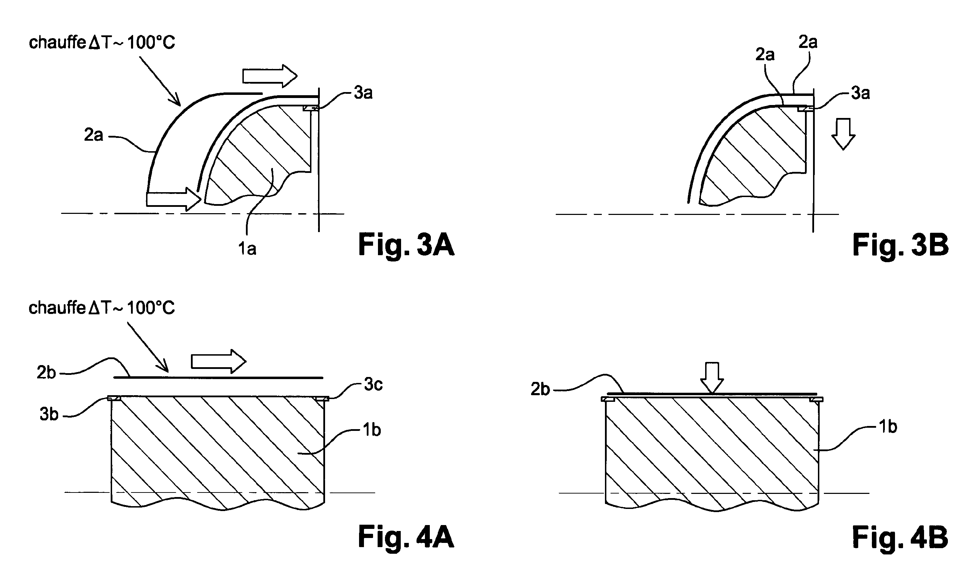

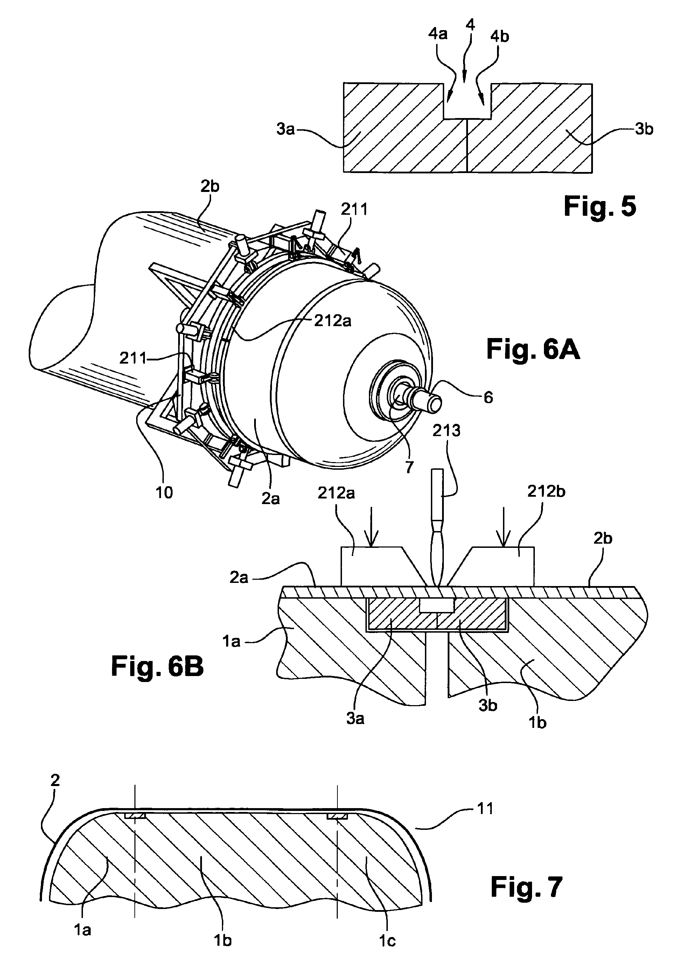

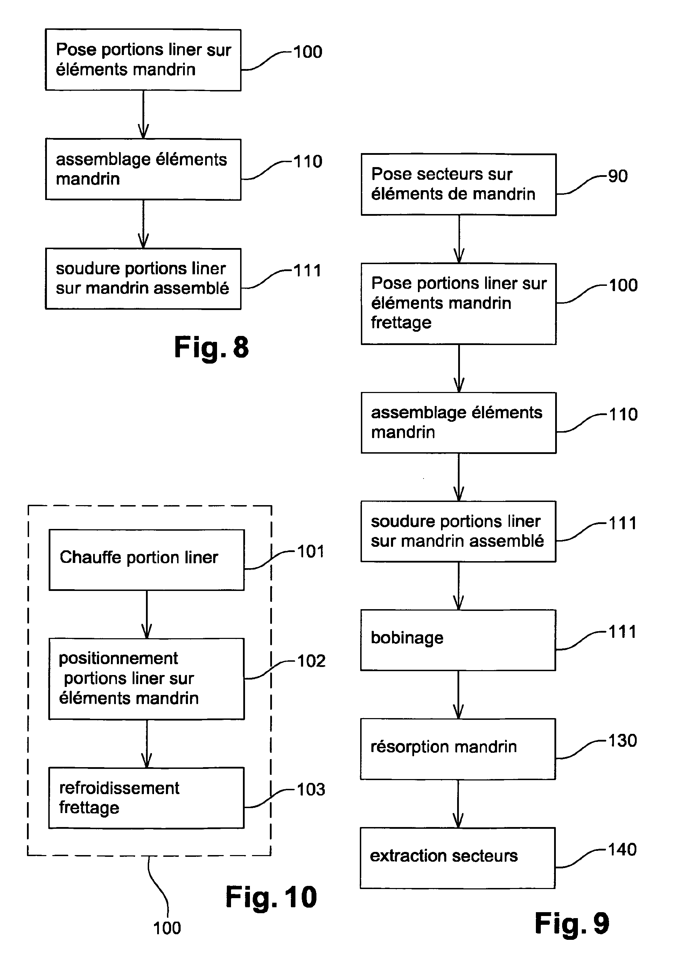

D'autres caractéristiques et avantages de l'invention seront apparents à la lecture de la description qui suit d'un exemple non limitatif de l'invention en référence aux dessins qui représentent:
en figure 1: une vue en coupe longitudinale d'un premier exemple de réalisation d'une portion d'outillage selon l'invention;
en figure 2: une vue en perspective éclatée d'un second exemple de réalisation d'une portion d'outillage selon l'invention;
aux figures 3A, 3B et 4A, 4B: un exemple de réalisation d'une étape de pose de portions de liner sur des éléments de mandrin de l'invention;
en figure 5: un détail de réalisation de secteurs selon un mode de réalisation de l'invention;
en figure 6A: un détail d'un opération de soudure d'un liner sur un outillage selon l'invention;
en figure 6B: un détail en coupe de face d'une opération de soudure au moyen de l'outillage de la figure 6A;
en figure 7: un schéma en coupe d'une portion de liner sur un mandrin selon l'invention;
en figure 8: un schéma des étapes principales d'un procédé selon l'invention;
en figure 9: un schéma détaillant les étapes d'un procédé conforme à un mode de réalisation de l'invention;
en figure 10: un schéma détaillant une étape de pose de portions de liner selon un mode de réalisation particulier de l'invention.

La figure 1 représente un outillage de fabrication d'un liner métallique notamment pour réservoir composite.

Cet outillage comporte un mandrin 1 configuré en plusieurs éléments de mandrin formant éléments support de pièces primaires constitutives du liner métallique.

Dans une application telle que la réalisation d'un liner de réservoir cylindrique à extrémités arrondies, les éléments support comprennent au moins un fond avant 1a, un fond arrière 1c et au moins un corps cylindrique intermédiaire 1 b.

Ces éléments de mandrin sont avantageusement des pièces en matériau soluble qui pourront être ainsi aisément retirées une fois le liner réalisé.

Pour offrir un bon état de surface pour la pose des portions de liner, les pièces en matériau soluble sont selon l'exemple recouvertes d'une peau 5 bouche pores.

Toujours selon la figure 1, l'outillage comprend des secteurs annulaires 3a, 3b, 3c, 3d adaptés à se positionner sur les extrémités de jonction desdits fond avant, fond arrière et corps cylindrique intermédiaire.

Lesdits secteurs annulaires 3a, 3b, 3c, 3d sont des secteurs en acier, par exemple un acier inox austénique.

Comme plus particulièrement représenté en figure 5, les secteurs annulaires comportent un décrochement annulaire périphérique 4a adapté à former une gorge annulaire 4 avec le décrochement annulaire périphérique 4b d'un secteur adjacent.

Comme il sera vu plus loin, ces gorges annulaires sont utiles pour réaliser une zone de dégagement pour une opération de soudure des portions de liner les unes aux autres.

Les secteurs annulaires 3a, 3b, 3c, 3d sont des secteurs démontables.

De retour à la figure 1, au moins certains des éléments de mandrin sont des pièces de révolution montées sur un axe 6 porteur du mandrin.

Selon l'exemple de la figure 2, les éléments de mandrin sont montés sur des tubes 7a, 7b, 7c de réception d'un axe 6 porteur du mandrin.

Le montage des éléments de mandrin sur les tubes 7a, 7b 7c facilite leur manutention et évite de les détériorer lors de leur montage sur l'axe 6.

La figure 2 représente en outre les secteurs 3a à 3d qui s'emboîtent sur les extrémités en regard des fond avant, fond arrière et corps intermédiaire.

Selon cette figure, les secteurs son positionnés lors du montage du mandrin sur l'axe 6 mais il est préférable de les positionner chacun sur son élément de mandrin préalablement à la pose des portions de liner.

Selon le procédé de l'invention, les différentes pièces primaires constitutives du liner (dôme avant, dôme arrière et virole) sont réalisées séparément puis elles sont assemblées sur le mandrin soluble préalablement usiné précisément.

Après usinage ou formage, les pièces primaires formant les portions de liner sont dilatées par chauffage, accostés sur les pièces correspondantes du mandrin puis frettées en position par simple contraction lors de leur refroidissement.

Les figures 3A et 3B donnent un exemple de pose d'une portion de liner formant un dôme avant 2a ou arrière d'un liner sur l'élément de mandrin correspondant 1a.

Selon la figure 3A, la portion de liner en forme de dôme est chauffée à environ 100°C pour un élément aluminium de sorte que cet élément se dilate puis est positionnée sur l'élément de mandrin correspondant.

Selon la figure 3B, la portion de liner 2a se refroidit et vient épouser la forme de l'élément de mandrin.

Il n'est pas besoin d'obtenir une dilatation très importante mais une dilatation telle que la portion de liner s'engage sans frottement sur l'élément de mandrin suffit.

Pour assurer une bonne tenue de la portion de liner sur son élément de mandrin il est souhaitable de réaliser le mandrin avec une cote externe légèrement supérieure à la cote interne de la portion de liner ce qui assure un frettage de la portion de liner sur l'élément de mandrin.

Les figures 4A et 4B représentent la pose d'un élément de virole du liner sur un élément cylindrique intermédiaire du mandrin.

Comme dans le cas des dômes, un chauffage de la portion de liner 2b permet son positionnement selon la figure 4A et le refroidissement de cette portion de liner permet son frettage sur le corps cylindrique 1 b.

Dans ces exemples, les secteurs 3a, 3b, 3c ont été au préalablement montés sur les éléments de mandrin et les extrémités des portions de liner viennent en appui sur ces secteurs.

Dans le cas d'un réservoir pour lequel on bobine des fibres composites sur le liner, la géométrie de la surface de bobinage est assurée par la conformation des pièces primaires constitutives du liner sur le mandrin lors du frettage ce qui donne une grande précision au produit obtenu, par exemple un réservoir cryogénique.

La fermeture du liner est réalisée par soudage des sous-ensembles sur le mandrin soluble. Pour ce faire, comme vu plus haut, le mandrin est équipé de secteurs démontables permettant de protéger et de dégager localement la zone de soudure.

La figure 6A donne un exemple d'outillage de soudure pouvant être utilisé.

L'outillage comporte une armature rigide 10 sur laquelle est fixée une pluralité de vérins 211 qui appuient fortement sur des secteurs externes 212a, 212b positionnés sur les éléments de liner 2a, 2b comme représenté à la figure 6B.

Ces secteurs externes ainsi que les secteurs internes 3a, 3b permettent un positionnement précis des éléments de liner à souder, pendant et après le soudage.

Le soudage utilise par exemple la technologie TIG et soit on déplace la tête de soudage 213 tout au long de la zone à souder soit la tête est fixe et l'objet est mis en rotation.

Si nécessaire, les vérins sont soulevés au passage de la tête de soudage.

L'opération de bobinage 11 peut ensuite être réalisée avec le liner terminé en position sur le mandrin comme schématisé en figure 7.

Une fois cette opération de bobinage terminée, le mandrin ainsi que les secteurs sont retirés de la structure.

Pour retirer le mandrin, dans le cas d'un mandrin soluble on fait fondre le matériau ou on le solubilise et, pour retirer les secteurs, on les déforme s'ils sont dans un matériau ressort et on les sort par l'extrémité ouverte de l'un des dômes.

L'outillage permet l'utilisation en tant que liner d'un matériau métallique à basse limite élastique qui se justifie dans le cadre d'une recherche d'optimisation de la tolérance du liner vis-à-vis de la mécanique de rupture.

Dans un autre exemple d'application permis par l'outillage selon l'invention, l'utilisation en tant que liner d'un matériau très ductile et/ou à faible limite élastique dans un réservoir composite présente l'avantage que le liner suive sans difficultés les déformations imposées par la structure composite.

C'est le cas en particulier pour une application cryogénique, avec un liner en alliage d'aluminium 1050.

Avec le procédé de l'invention, il n'est pas nécessaire de sur-épaissir certaines zones du liner pour la dépose du bobinage composite du fait de la présence du mandrin qui supporte les efforts de compactage.

Dans tous les cas, le mandrin selon l'invention permet de pallier une tenue mécanique intrinsèque insuffisante d'un liner aminci et inadapté pour supporter seul les efforts induits lors de la fabrication du réservoir.

Dans l'état de l'art, la géométrie externe du liner doit être réalisée de façon très précise afin de garantir la qualité de la surface de dépose du composite. En outre, dans le cas où les pièces primaires constitutives du liner doivent être assemblées par soudage, la géométrie du liner doit être également réalisée avec une grande précision pour assurer le respect des tolérances d'accostage requise par le procédé de bobinage.

Ces exigences de précision surenchérissent le coût du liner et sont d'autant plus critiques à assurer que l'épaisseur du liner est faible et ses dimensions importantes.

Le liner réalisé au moyen du procédé et de l'outillage selon l'invention permet d'augmenter la tolérance de forme sur les pièces primaires puisque la garantie du respect de la surface de dépose est assurée par le mandrin.

Le procédé et l'outillage de l'invention permettent également d'autoriser l'utilisation d'un procédé de soudage plus énergétique qui requiert des tolérances d'accostages moins sévères car les déformations de la structure lors du soudage sont atténuées par la présence d'un soutien interne constitué par le mandrin et par les secteurs disposés au niveau de la zone de soudure.

Il en résulte un gain de coût sur le procédé de fabrication du liner.

L'exemple d'application de l'invention porte sur la réalisation d'un liner de diamètre 1600mm en aluminium pur.

L'épaisseur du liner en partie virole est de 1 mm.

Ce liner est réalisé en 3 sections, assemblées par soudage, de préférence TIG.

Le mandrin en matériau soluble type Arényl (Sable et alcool polyvinylique) est équipé des secteurs destinés à la réalisation des soudures circonférentielles :
Le procédé général représenté à la figure 8 comporte une étape 100 de pose de portions 2a, 2b, 2c d'un liner sur des éléments de mandrin formant un fond avant 1a, fond arrière 1c et au moins un corps cylindrique intermédiaire 1b, une étape 110 d'assemblage des éléments du mandrin portant les portions du liner et une étape 111 de soudure des portions du liner assemblé sur les éléments du mandrin.

Selon la figure 9, le procédé général comporte en outre une étape 120 de bobinage de fibres 8 sur le liner assemblé sur les éléments du mandrin et l'étape 110 d'assemblage des éléments du mandrin est réalisée sur un axe d'entraînement en rotation du mandrin.

L'étape de bobinage 120 est réalisée de manière connue par bobinage de fibres composites imprégnées de résine et, dans le cas où le mandrin est un mandrin soluble, le procédé comporte après l'étape de bobinage une étape 130 de résorption du mandrin qui précède une étape 140 d'extraction des secteurs métalliques.

Les éléments du mandrin comportant un fond avant, un fond arrière et au moins un corps cylindrique intermédiaire, le procédé comporte une étape 90 de positionnement de secteurs annulaires 3a, 3b, 3c, 3d sur les extrémités de jonction desdits fond avant, fond arrière et au moins un corps cylindrique intermédiaire avant l'étape 100 de pose des portions de liner sur les éléments de mandrin.

L'étape 111 de soudure des portions du liner assemblé sur les éléments du mandrin est alors réalisée par soudure des bords en regard des portions du liner au dessus de gorges 4 au niveau des secteurs annulaires.

Selon la figure 10, l'étape 100 de pose des portions de liner comprend une étape 101 de chauffe des portions de liner, une étape 102 de positionnement des portions de liner sur les éléments de mandrin et une étape 103 de refroidissement des portions de liner réalisant un frettage des portions de liner sur les éléments de mandrin.

En résumé selon un mode de réalisation particulier de l'invention, le procédé commence par un accostage des pièces primaires sur le mandrin, par exemple selon la séquence suivante:
1- Accostage des portions de liner formant un fond avant et un fond arrière du liner sur les fonds avant et arrière du mandrin,
2- Frettage des portion de liner sur les éléments de mandrin correspondants et usinage des accostages
1- Accostage de la virole du liner sur le corps cylindrique intermédiaire
2- Frettage de la virole sur le corps cylindrique intermédiaire et usinage des accostages.

Les étapes suivantes sont le montage ensemble des éléments de mandrin pour constituer le mandrin complet puis la soudure des portions de liner les unes aux autres.

Un contrôle des lignes de soudure est réalisé en présence du mandrin puis le bobinage 11 du matériau du composite est effectué en faisant tourner le mandrin sur son axe 6 comme schématisé en figure 7.

Enfin, le mandrin est retiré.

L'invention peut s'appliquer évidemment pour la réalisation de liners pour réservoirs métalliques ou composites. Elle peut également s'appliquer de façon plus générale à la production de pièces métalliques ou bobinées minces comme des tubes.

## Revendications

1. Outillage de fabrication d'un liner métallique notamment pour réservoir composite, **caractérisé en ce qu'**il comporte un mandrin (1) configuré en au moins deux éléments de mandrin (1a, 1b, 1c) conformés pour être adaptés à former des éléments support de pièces primaires (2a, 2b, 2c) constitutives du liner métallique, et **en ce qu'**il comporte au moins un secteur annulaire (3a, 3b, 3c, 3d) se positionnant sur des extrémités de jonction desdits éléments support.

2. Outillage selon la revendication 1, **caractérisé en ce que**, le liner étant un liner de réservoir cylindrique à extrémités arrondies, les éléments support comprennent au moins un fond avant (1a), un fond arrière (1c) et au moins un corps cylindrique intermédiaire (1b), des secteurs annulaires (3a, 3b, 3c, 3d) se positionnant sur les extrémités de jonction desdits fond avant, fond arrière et corps cylindrique intermédiaire.

3. Outillage selon la revendication 1 ou 2 **caractérisé en ce que** lesdits secteurs annulaires (3a, 3b, 3c, 3d) sont des secteurs en acier.

4. Outillage selon la revendication 1, 2 ou 3 **caractérisé en ce que** les secteurs annulaires comportent un décrochement annulaire périphérique (4a) adapté à former une gorge annulaire (4) avec le décrochement annulaire périphérique (4b) d'un secteur adjacent.

5. Outillage selon l'une quelconque des revendications 1 à 4 **caractérisé en ce que** les secteurs annulaires (3a, 3b, 3c, 3d) sont des secteurs démontables.

6. Outillage selon l'une quelconque des revendications précédentes **caractérisé en ce que** les éléments de mandrin sont des pièces en matériau soluble.

7. Outillage selon la revendication 6 **caractérisé en ce que** les pièces en matériau soluble sont recouvertes d'une peau bouche pores (5).

8. Outillage selon l'une quelconque des revendications précédentes **caractérisé en ce que** au moins certains des éléments de mandrin sont des pièces de révolution montées sur un axe (6) porteur du mandrin.

9. Outillage selon l'une quelconque des revendications 1 à 7 **caractérisé en ce que** au moins certains des éléments de mandrin sont montés sur des tubes (7a, 7b, 7c) de réception d'un axe (6) porteur du mandrin.

10. Procédé de réalisation d'un objet comportant un liner métallique, **caractérisé en ce qu'**il comporte une étape (100) de pose de portions (2a, 2b, 2c) d'un liner sur des éléments de mandrin, une étape (110) d'assemblage des éléments du mandrin portant les portions du liner et une étape (111) de soudure des portions du liner sur les éléments du mandrin assemblés.

11. Procédé selon la revendication 10 appliqué à un réservoir composite, **caractérisé en ce qu'**il comporte une étape (120) de bobinage de fibres (8) sur le liner terminé sur le mandrin.

12. Procédé selon la revendication 10 ou 11, **caractérisé en ce que** l'étape (110) d'assemblage des éléments du mandrin est réalisée sur un axe d'entraînement en rotation du mandrin.

13. Procédé selon la revendication 10, 11 ou 12, **caractérisé en ce que**, le mandrin étant un mandrin soluble, le procédé comporte une étape (130) de résorption du mandrin après soudure ou bobinage.

14. Procédé selon l'une quelconque des revendications 10 à 13, **caractérisé en ce qu'**il comporte une étape (90) de positionnement de secteurs annulaires (3a, 3b, 3c, 3d) sur les extrémités de jonction desdits éléments de mandrin avant l'étape (100) de pose des portions de liner sur les éléments de mandrin.

15. Procédé selon la revendication 14, **caractérisé en ce que** l'étape (111) de soudure des portions du liner assemblé sur les éléments du mandrin est réalisée par soudure des bords en regard des portions du liner au dessus de gorges (4) au niveau des secteurs annulaires.

16. Procédé selon l'une quelconque des revendications 10 à 15, **caractérisé en ce que** l'étape (100) de pose desdites portions comprend une étape (101) de chauffe des portions de liner, une étape (102) de positionnement des portions de liner sur les éléments de mandrin et une étape (103) de refroidissement des portions de liner réalisant un frettage des portions de liner sur les éléments de mandrin.

17. Procédé selon l'une quelconque des revendications 10 à 16 appliqué à la réalisation d'un réservoir composite à liner métallique, **caractérisé en ce que** les éléments de mandrin sont conformés en un fond avant (1a), fond arrière (1c) et au moins un corps cylindrique intermédiaire (1b).

## Patentansprüche

1. Werkzeug zur Herstellung eines metallischen Liners, insbesondere für einen Verbundbehälter, dadurch gekenntzeichnet, dass es einen Dorn (1) aufweist, der aus mindestens zwei Dornelementen (1a, 1b, 1c) konfiguriert ist, die so gestaltet sind, dass sie angepasst werden können, um Trägerelement vor Primärbauteilen (2a, 2b, 2c) zu formen, die Bestandteil des metallischen Liners sind, und dass es mindestens einen ringförmigen Sektor (3a, 3b, 3c, 3d) aufweist, der auf Verbindungsenden der Trägerelemente positioniert wird.

2. Werkzeug nach Anspruch 1, **dadurch gekennzeichnet, dass**, wenn der Liner ein Liner eines zylinderischen Behälters mit abgerundeten Enden ist, die Trägerelemente mindestens einen vorderen Boden (1a), einen hinteren Boden (1c) und mindestens einen zylinderischen Zwischenkörper (1b) enthalten, wobei ringförmige Sektoren (3a, 3b, 3c, 3d) auf die Verbindungsenden des vorderen Bodens, des hinteren Bodens und des zylinderischen Zwischenkörpers positioniert werden.

3. Werkzeug nach Anspruch 1 oder 2, dadurch gekennzeichet, dass die ringförmigen Sektoren (3a, 3b, 3c, 3d) Sektoren aus Stahl sind.

4. Werkzeug nach Anspruch 1, 2 oder 3, dadurch gekennzeichet, dass die ringförmigen Sektoren einen ringförmigen Umfangsabsatz (4a) aufweisen, der geeignet ist, um mit dem ringförmigen Umfangsabsatz (4b) eines benachbarten Sektors eine Ringnut (4) zu bilden.

5. Werkzeug nach einem der Ansprüche 1 bis 4, **dadurch gekennzeichnet, dass** die ringförmigen Sektoren (3a, 3b, 3c, 3d) ausbaubare Sektoren sind.

6. Werkzeug nach einem der vorhergehenden Ansprüche, dadurch gekennzeichet, dass die Dornelemente Bauteile aus löslichem Material sind.

7. Werkzeug nach Anspruch 6, **dadurch gekennzeichnet, dass** die Bauteile aus löslichem Material mit einer Porenfüllerhaut (5) bedeckt sind.

8. Werkzeug nach einem der vorhergehenden Ansprüche, dadurch gekennzeichet, dass mindestens bestimmte der Dornelemente drehsymmetrische Bauteile sind, die auf eine den Dorn tragende Achse (6) montiert sind.

9. Werkzeug nach einem der Ansprüche 1 bis 7, dadurch gekenntzeichnet, dass mindestens bestimmte der Dornelemente auf Aufnahmerohre (7a, 7b, 7c) einer den Dorn tragenden Achse (6) montiert sind.

10. Verfahren zur Herstellung eines Gegenstands, der einen metallischen Liner aufweiset, dadurch gekennzeichet, dass es einen Schritt (100) des Aufbringens von Abschnitten (2a, 2b, 2c) eines Liners auf Dornelemente, einen Schritt (110) des Zusammenbaus der Elemente des Dorns, die die Abschnitte des Liners tragen, und einen Schritt (111) des Schweißens der Abschnitte des Liners auf die zusammengebauten Elemente des Dorns aufweist.

11. Verfahren nach Anspruch 10, angewendet an einen Verbundbehälter, dadurch gekenntzeichnet, dass es einen Schritt (120) des Wickelns von Fasern (8) auf den fertig gestellten Liner auf dem Dorn aufweist.

12. Verfahren nach Anspruch 10 oder 11, dadurch gekennzeichet, dass der Schritt (110) des Zusammenbaus der Elemente des Dorns auf einer Drehantriebsachse des Dorns ausgeführt wird.

13. Verfahren nach Anspruch 10, 11 oder 12, **dadurch gekennzeichnet, dass**, wenn der Dorn ein löslicher Dorn ist, das Verfahren einen Schritt (130) der Resorption des Dorns nach dem Schweißen oder Aufwickel aufweist.

14. Verfahren nach einem der Ansprüche 10 bis 13, **dadurch gekennzeichnet, dass** es einen Schritt (90) der Positionierung von ringförmigen Sektoren (3a, 3b, 3c, 3d) auf den Verbindungsenden der Dornelemente vor dem Schritt (100) des Aufbringens der Linerabschnitte auf die Dornelemente aufweist.

15. Verfahren nach Anspruch 14, **dadurch gekennzeichnet, dass** der Schritt (111) des Schweißens der Abschnitte des zusammengebauten Liners auf die Elemente des Dorns durch Schweißen der gegenüberliegenden Ränder der Abschnitte des Liners oberhalb von Nuten (4) im Bereich der ringförmigen Sektoren ausgeführt wird.

16. Verfahren nach einem der Ansprüche 10 bis 15, **dadurch gekennzeichnet, dass** der Schritt (100) des Aufbringens der Abschnitte einen Schritt (101) des Erwärmens der Linerabschnitte, einen Schritt (102) der Positionierung der Linerabschnitte auf den Dornelementen und einen Schritt (103) der Abkühlung der Linerabschnitte enthält, der ein Aufschrumpfen der Linerabschnitte auf die Dornelemente durchführt.

17. Verfahren nach einem der Ansprüche 10 bis 16, das bei der Herstellung eines Verbundbehälters mit metallischem Liner angewendet wird, **dadurch gekennzeichnet, dass** die Dornelemente in einem vorderen Boden (1a), einem hinteren Boden (1c) und mindestens einem zylinderischen Zwischenkörper (1b) gestaltet sind.

## Claims

1. Toolset for manufacturing a metal liner in particular for a composite tank, **characterized in that** it comprises a mandrel (1) configured as at least two mandrel elements (1a, 1b, 1c) shaped to be adapted to form support elements of primary parts (2a, 2b, 2c) constituting the metal liner, and **in that** it comprises at least one annular sector (3a, 3b, 3c, 3d) positioned on junction ends of the said support elements.

2. Toolset according to Claim 1, **characterized in that**, with the liner being a cylindrical tank liner with rounded ends, the support elements comprise at least one front end wall (1a), one rear end wall (1c) and at least one intermediate cylindrical body (1b), annular sectors (3a, 3b, 3c, 3d) bering positioned on the junction ends of the said front end wall, rear end wall and intermediate cylindrical body.

3. Toolset according to Claim 1 or 2, **characterized in that** the said annular sectors (3a, 3b, 3c, 3d) are sectors made of steel.

4. Toolset according to Claim 1, 2 or 3, **characterized in that** the annular sectors comprise a peripheral annular offset (4a) adapted to form an annular groove (4) with the peripheral annular offset (4b) of an adjacent sector.

5. Toolset according to any one of Claims 1 to 4, **characterized in that** the annular sectors (3a, 3b, 3c, 3d) are removable sectors.

6. Toolset according to any one of the preceding claims, **characterized in that** the mandrel elements are parts made of soluble material.

7. Toolset according to Claim 6, **characterized in that** the parts made of soluble maternal are covered with a pore-blocking skin (5).

8. Toolset according to any one of the preceding claims, **characterized in that** at least some of the mandrel elements are parts of revolution mounted on a mandrel-bearing shaft (6).

9. Toolset according to any one of Claims 1 to 7, **characterized in that** at least some of the mandrel elements are mounted on tubes (7a, 7b, 7c) for receiving a mandrel-bearing shaft (6).

10. Method for producing an object comprising a metal liner, **characterized in that** it comprises a step (100) of placing portions (2a, 2b, 2c) of a liner on mandrel elements, a step (110) of assembling the elements of the mandrel bearing the portions of the liner and a step (111) of welding the portions of the liner to the assembled elements of the mandrel.

11. Method according to Claim 10 applied to a composite tank, **characterized in that** it comprises a step (120) of winding fibres (8) on the liner completed on the mandrel.

12. Method according to Claim 10 or 11, **characterized in that** the step (110) of assembling the elements of the mandrel is carried out on a shaft for rotating the mandrel.

13. Method according to Claim 10, 11 or 12, **characterized in that**, with the mandrel being a soluble mandrel, the method comprises a step (130) of resorbing the mandrel after welding or winding.

14. Method according to any one of Claims 10 to 13, **characterized in that** it comprises a step (90) of positioning annular sectors (3a, 3b, 3c, 3d) on the junction ends of the said mandrel elements before the step (100) of placing the liner portions on the mandrel elements.

15. Method according to Claim 14, **characterized in that** the step (111) of welding the portions of the assembled liner to the elements of the mandrel is carried out by welding the edges facing the portions of the liner above grooves (4) at the annular sectors.

16. Method according to any one of Claims 10 to 15, **characterized in that** the step (100) of placing the said portions comprises a step (101) of heating the liner portions, a step (102) of positioning the liner portions on the mandrel elements and a step (103) of cooling the liner portions producing a shrink-fitting of the liner portions on the mandrel elements.

17. Method according to any one of Claims 10 to 16 applied to the production of a composite tank with a metal liner, **characterized in that** the mandrel elements are configured as a front end wall (1a), rear end wall (1c) and at least one intermediate cylindrical body (1b).
